# EUROPEAN PATENT SPECIFICATION

(11) **EP 1 976 184 B1**
(45) Date of publication and mention of the grant of the patent: **26.07.2017**
(21) Application number: 06828272.2
(22) Date of filing: 07.12.2006
(51) Int. Cl.: H04L 12/54, H04L 12/26, H04L 12/927, H04L 12/911

(54) **A GUARANTEED QUALITY OF SERVICE (QOS) METHOD, RESOURCE MANAGEMENT DEVICE AND ACCESSING SYSTEM FOR MULTI-SERVICES**
GARANTIERTES DIENSTGÜTEVERFAHREN, RESSOURCENVERWALTUNGSERÄT UND ZUGANGSSYSTEM FÜR MEHRFACHDIENSTE
PROCÉDÉ DE QUALITÉ DE SERVICE (QOS) GARANTIE, DISPOSITIF DE GESTION DE RESSOURCES ET SYSTÈME D'ACCÈS MULTI-SERVICES

(30) Priority: 20.01.2006 CN 200610001556
(43) Date of publication of application: 01.10.2008
(73) Proprietor: Huawei Technologies Co., Ltd., Longgang District Shenzhen, Guangdong 518129 (CN)
(72) Inventor: CHEN, Wumao, Guangdong 518129 (CN); WEI, Jiahong, Guangdong 518129 (CN)
(74) Representative: Isarpatent
(86) International application number: PCT/CN2006/003329
(87) International publication number: WO 2007/082448

(56) References cited:
- EP-A- 1 553 737
- CN-A- 1 518 279
- CN-A- 1 523 834
- CN-A- 1 620 036
- US-A1- 2005 015 494
- ALCATEL: "Alcatel 5430 SRB" INTERNET CITATION, [Online] XP002283965 Retrieved from the Internet: URL:http://www.alcatel.com/products/produc tsummary.jhtml?repositoryID=/x/ opgproduct/a5430srb.jhtml> [retrieved on 2004-06-10]
- SARGENTO S ET AL: "IP-BASED ACCESS NETWORKS FOR BROADBAND MULTIMEDIA SERVICES" IEEE COMMUNICATIONS MAGAZINE, IEEE SERVICE CENTER, PISCATAWAY, US, vol. 41, no. 2, 1 February 2003 (2003-02-01), pages 146-154, XP001143378 ISSN: 0163-6804
- DONGYAN XU ET AL: "QoS and contention-aware multi-resource reservation", HIGH-PERFORMANCE DISTRIBUTED COMPUTING, 2000. PROCEEDINGS. THE NINTH I NTERNATIONAL SYMPOSIUM ON AUGUST 1-4, 2000, PISCATAWAY, NJ, USA,IEEE, 1 August 2000 (2000-08-01), pages 3-10, XP010511528, ISBN: 978-0-7695-0783-5
- Dongyan Xu ET AL: "QoS and Contention-Aware Multi-Resource Reservation", Cluster Computing 4, 2001, 14 April 2001 (2001-04-14), pages 95-107, XP55012333, Retrieved from the Internet: URL:http://citeseerx.ist.psu.edu/viewdoc/d ownload?doi=10.1.1.18.2855&rep=rep1&type=p df [retrieved on 2011-11-16]

## Description

### Field of the Invention

The present invention relates to network access technologies, and particularly, to an access system, an access network resource management device and methods for guaranteeing Quality of Service (QoS).

### Background of the Invention

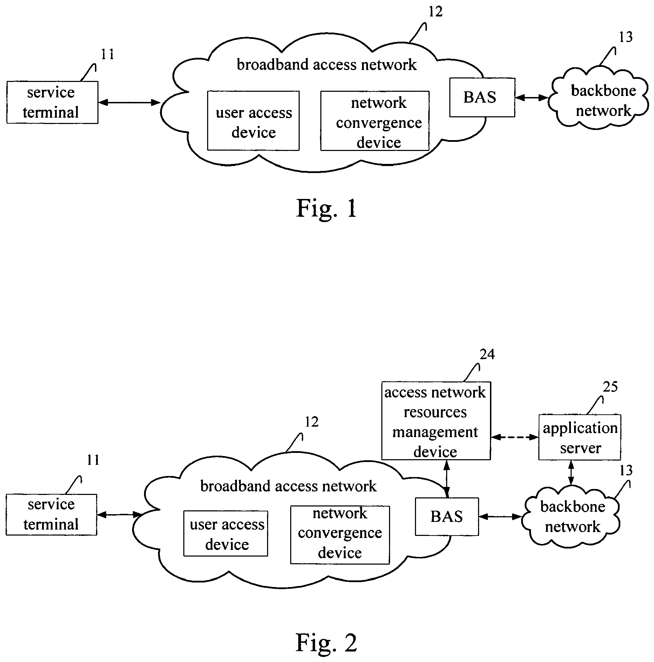

Figure 1 is a schematic diagram showing a system structure of an access network in the prior art, which includes at least one service terminal 11, a broadband access network 12 and a backbone network 13. The service terminal 11 is a terminal device and service initiating device used by a user being online, for example a Cable TV, a Session Initiation Protocol (SIP) telephone, a Set Top Box (STB) or a portable computer. The broadband access network 12 includes at least one user access device, at least one network convergence device and at least one Broadband Access Server (BAS). In the broadband access network 12, each user access device connects a plurality of service terminals with the network convergence device to implement a user line tandem function; the network convergence device connects a plurality of user access devices with the BAS; the BAS transfers service data to the backbone network 13. The typical topology of the broadband access network 12 is complex and the connection relations between the user access devices, the network convergence devices and the BASs are complex, and different applications usually adopt different topologies or combinations of different topologies such as star, tree, ring or chain, so the connections between various network devices are not presented in detail in the structure diagram of Figure 1.

At the beginning of establishing a broadband access network, the Internet services for users are generally conventional Internet services, and with limited cost and user population and with other limitations the access devices in the broadband access network employs a best effort forwarding scheme for all data packets irrespective of the service category. Herein, the access devices include the user access devices, the network convergence devices and the BASs in the broadband access network. Because the best effort forwarding scheme is used in the broadband access network, congestion at the user access devices and at the network convergence devices is unavoidable. Meanwhile, since the design of the network did not take real-time service applications with QoS requirements into consideration, services with QoS guarantee can not be implemented. Furthermore, network operators can not charge users sufficient fees due to the lack of capability to provide Internet services with QoS guarantee.

There is a technical solution in the prior art which can ensure the Qos for services with QoS requirements. The solution includes: reserving enough bandwidth for each access device in the network by the broadband access network, controlling the quantity of newly-added traffic in the access device, and restricting the maximum number of active accounts of real-time services in the network manually. In this technical solution when reserving bandwidth for each access device, sharing of network resources can hardly be achieved because the amount of bandwidth reserved for each access device generally depends on the maximum number of concurrent user accounts and the maximum rate of high priority services, and the extending of user population and services, especially for some high priority services, is also hard to be implemented because the maximum number of users and types of services have been predetermined during the reserving of the bandwidth. The network resources may suffer a great waste due to the services whose quantity of "virtual traffic" is small and for which a large amount of bandwidth is reserved, such as Video On Demand (VOD).

EP1553737 provides a physical layer session resource broker which receives request from application servers which are translated into physical layer parameter values. This document refers to Alcatel 5430 SRB which keeps track of the available resources in a Digital Subscriber line access network, controls session admission by blocking calls that require more bandwidth than available, and ensures - when admitting a session - that the application session receives an appropriate quality of service.

ALCATEL: "Alcatel 5430 SRB" introduces Alcatel 5430 Session Resource Broker (SRB), in which "a session admission control engine keeps track of available resources and blocks calls if they would congest the network or affect the performance of ongoing calls". SARGENTO S ET AL:"IP-BASED ACCESS NETWORKS FOR BROADBAND MULTIMEDIA SERVICES" from IEEE communications magazine "describe an IP-based architecture targeted for integrated support of broadband multimedia services, ...using SIP for session initiation, COPS and DIAMETER for QoS policy management, and AAA and RSVP for resource reservation".

CN-A-1523834 provides a method for guaranteed QoS in an IP network. where a bearer network resource manager in a domain to which a calling user belongs chooses a service path made up of multiple Label Switched Paths based on conditions of resources in the bearer network to establish a multi-domain service connection between the calling user and a called user, and sends a resource reservation request to a second bearer network resource manager of the downstream domain, then the second bearer network resource manager sends a resource reservation request to a third downstream bearer network resource manager; then a reservation success message is sent upstream from the bearer network resource manager in the domain of the called user. This solution utilizes multi-level label stack technology and is based on MPLS technology.

### Summary of the Invention

The present invention provides an access system for guaranteeing Quality of Service (QoS).

The present invention also provides an access network resource management device for guaranteeing the Quality of Service (QoS).

The present invention also provides a method for guaranteeing Quality of Service (QoS).

Main technical features of the present invention are given as follows.

Embodiments of the present invention provide an access system for guaranteeing Quality of Service (QoS), including: an application server and an access network resource management device, wherein
the application server is adapted to receive a request from a service terminal for a service with QoS requirements; request the access network resource management device for resources to establish a service connection for the service terminal; and determine whether to accept the request of the service terminal on obtaining a resource available response from the access network resource management device;
the access network resource management device is adapted to record links from a user access device to an access server in a node data table according to the network topology and further record all the link resources including occupied and unoccupied resources in the links from the user access device to the access server; acquire information indicating a user access device that sent the request from the service terminal for the service with QoS requirement; search the node data table to acquire links constituting a service connection through which service data would pass from the user access device to an access server; determine whether there are link resources available for the links by checking link resources occupation information saved in a link data table; and send the resource available response to the application server when determining that there are link resources available for the links;
wherein the links are saved as tree-shaped topology in the node data table; wherein ring-shaped topology of a network topology of the access network is transformed into tree-shaped topology and recorded in the node data table when initiating the node data table. In addition, embodiments of the present invention further provide an access network resource management device for guaranteeing QoS including:
a management control unit (32), is adapted to receive a request from a application server (25); wherein the request is sent from a service terminal (11) for occupying resources through a user access device; acquire information indicating the user access device; search a node data table to acquire links constituting a service connection through which service data would pass from the user access device to an access server according to the information indicating the user access device; determine whether there are link resources available for the links by checking link resources occupation information saved in a link data table; and send the resource available response to the application server (25) when determining that there are link resources available for the links;
a database unit (31), adapted to record links from a user access device to an access server in the node data table according to the network topology and further record all the link resources including occupied and unoccupied resources in the links from the user access device to the access server; store the node data table and the link data table; wherein the links are saved as tree-shaped topology in the node data table; wherein ring-shaped topology of a network topology of the access network is transformed into tree-shaped topology and recorded in the node data table when initiating the node data table.

At the same time, embodiments of the present invention further provide a method for guaranteeing QoS, setting a node data table and a link data table in an access network resource management device, wherein the node data table records links through which service data would pass from a user access device to an access server; and the link data table records link resources occupation information of the links; wherein the links are saved as tree-shaped topology in the node data table; wherein ring-shaped topology of a network topology of an access network is transformed into tree-shaped topology and recorded in the node data table when initiating the node data table; the method includes:
receiving, by the access network resource management device, a request from a application server; wherein the request is sent from a service terminal for occupying resources through a user access device;
acquiring, by the access network resource management device, information indicating the user access device;
searching, by the access network resource management device, the node data table to acquire links constituting a service connection through which service data would pass from the user access device to an access server according to the information indicating the user access device;
determining, by the access network resource management device, whether there are link resources available for the links by checking link resources occupation information saved in the link data table; and
sending, by the access network resource management device, the resource available response to the application server when determining that there are link resources available for the links.

The access system for guaranteeing QoS provided by the present invention enables the sharing of network resources and guarantees the QoS by newly adding an access network resource management device in the access system and determining whether to accept the service access according to the unoccupied resources in the access network.

The access network resource management device for guaranteeing QoS of provided by the present invention enables the sharing of network resources and guarantees the QoS by determining whether to accept the service access according to the unoccupied resources in the access network.

Moreover, the method for guaranteeing the QoS provided by the present invention enables the sharing of network resources and guarantees the QoS by determining whether to accept the service access according to the unoccupied resources in the access network.

### Brief description of the drawings

Figure 1 is a structure diagram of an access system in the prior art.
Figure 2 is a structure diagram of an access system in accordance with an embodiment of the present invention.
Figure 3 is a structure diagram of an exemplary access network resource management device in accordance with an embodiment of the present invention.
Figure 4 is a schematic diagram of an exemplary tree forming from a shared ring.
Figure 5 is a schematic diagram of an exemplary tree forming from a non-shared ring.
Figure 6 is a flowchart of the method in accordance with an embodiment of the present invention.

### Detailed description of the invention

According to the core idea of the present invention, an access network resource management device is added into an access system for managing the topology and network resources of the access network. Taking a service terminal attempting to access the network for a service with QoS requirements as an example, the service terminal first applies for a resources occupation to the access network management device via the application server. And the access network resource management device makes a judgment on whether there are enough resources available according to the resources information registered in the database, and notifies an application server of the judgment. Then the application server determines whether to accept the access according to the resource occupation application and the judgment.

In the present invention, the services with QoS requirements can be real-time services or other Internet services which requires a QoS guarantee, and the resource referred to is mainly directed to the link resource, and in the description the link resource is illustrated by taking the bandwidth as an example.

The present invention is hereinafter described in detail with reference to the accompanying drawings and exemplary embodiments so that the object, solution and merits thereof could be more apparent.

Figure 2 shows a structure diagram of an access system in accordance with an embodiment of the present invention. The system includes: at least one service terminal 11, a broadband access network 12, a backbone network 13, an access network resource management device 24 and an application server 25. In Figure 2 the real lines represent physical connections and the dashed lines represent signaling connections between the network devices.

While initiating a service with QoS requirements, the service terminal 11 sends a request to the application server 25 via the broadband access network 12 and the backbone network 13 for establishing a call connection.

The application server 25, such as a soft switch device, is connected with a BAS via the backbone network 13. The application server 25 is adapted to establish a signaling connection with the access network resource management device 24 via the BAS and the backbone network 13. And the application server 25 is also adapted to receive the request for establishing a call connection sent by the service terminal 11 via the broadband access network 12 and the backbone network 13, to send a request to the access network resource management device 24 to occupy resources for the service initiated by the service terminal 11, and to return a result to the service terminal of establishing the call connection based on the result returned by the access network resource management device 24 of the resources occupancy. And the application server 25 is yet adapted to receive a request from the service terminal 11 for a call connection removal, to send a request to the access network resource management device 24 for releasing the resource for the service terminal 11, and to remove the connection with the service terminal 11 according to the result returned by the access network resource management device 24 for releasing the resource.

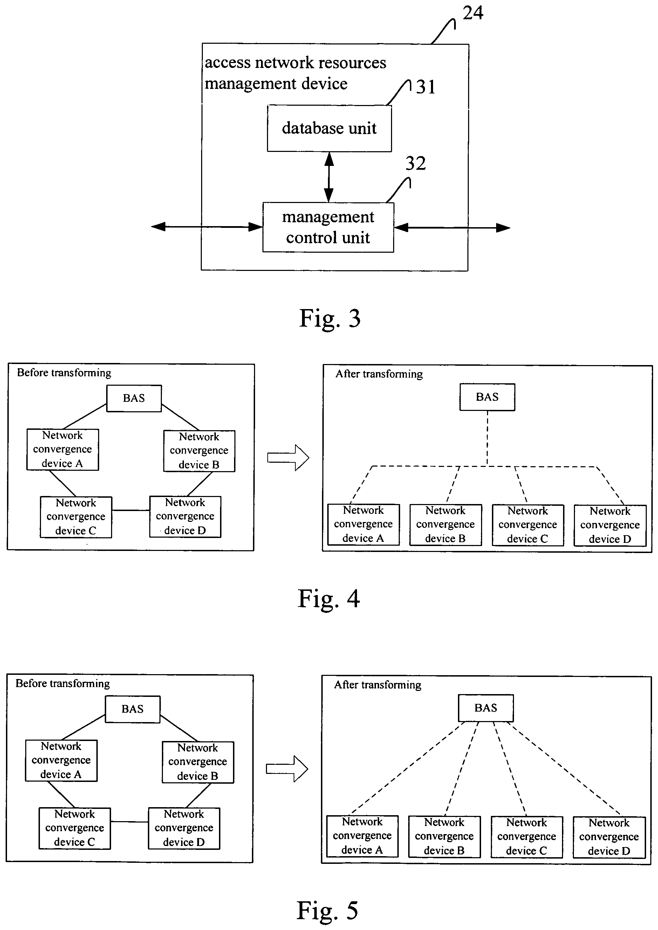

Figure 3 shows the internal structure diagram of an exemplary access network resource management device 24, including: a database unit 31 and a management control unit 32.

A node data table and a link data table reside in the database unit 31 of the access network resource management device 24. The node data table records the links through which the service data would pass from the user access device to the BAS. The link data table records all the link resources in the links from the user access device to the BAS, in which the record of the link resources include the total resources of each link, the occupied resources and the unoccupied resources. The detailed content of the node data table is as shown in Table 1, and the detailed content of the link data table is as shown in Table 2, wherein the bandwidth is used for indicating the information of the link resources.

**Table 1**

| user access device | the links to the BAS |
|---|---|
| Device 1 | link1, link3, link6 |
| Device 2 | link2, link3, link6 |
| Device 3 | link4, link5, link6 |

**Table 2**

| link | total bandwidth | occupied bandwidth | unoccupied bandwidth = total bandwidth - occupied bandwidth |
|---|---|---|---|
| link1 | 100M | 20M | 80M |
| link2 | 100M | 10M | 90M |
| link3 | 200M | 30M | 170M |
| link4 | 100M | 50M | 50M |
| link5 | 200M | 50M | 150M |
| link6 | 1G | 80M | 920M |

The QoS policies for various services may also be saved in the database unit 31 apart from the node data table and the link data table, wherein the services are directed to services with QoS requirements.

The management control unit 32 is adapted to receive the request of the service terminal 11 for occupying resources delivered by the application server 25, to determine the user access device which sent the request, and to determine the links through which the service data would pass from the user access device to the BAS. After obtaining the links through which the service data would pass, the management control unit 32 checks the link resources occupation information saved in the database unit 31, allows the request for occupying resources delivered by the application server 25 if there are resources available for the service terminal 11 in all of the links, or rejects the request for occupying resources if there are not enough resources for the service terminal 11 in all of the links from the service terminal 11 to the BAS. When allowing the request for occupying resources, the management control unit 32 searches for the corresponding QoS policy for the service based on the type of service requested, sends the QoS policy of the service to the BAS, and updates the link resources occupation information saved in the database unit 31 according to the resources occupied by the presently requested service, i.e., adds the amount of the resources occupied by the presently requested service to the sum of the occupied resource, and subtracts the amount of the resources occupied by the presently requested service from the unoccupied resources.

The management control unit 32 may further be adapted to receive the request delivered by the application server 25 for releasing resources, to update the link resources occupation information saved in the database unit 31 according to the links passed by the service of which the resources are requested to be released, to inform the BAS to delete the QoS policy for the service, and to return a result of releasing the resources to the application server 25. Updating the database unit 31 includes: subtracting the amount of resources released during termination of the service from the sum of occupied resources in the link data table, and modifying the unoccupied resources in the link data table according to the formula that the unoccupied resources equal the total resource subtracting the occupied resources.

According to one aspect of the embodiment, the access network resource management device needs to know the links through which the service data would pass from the user access device to the BAS, and before the above mentioned procedure in the embodiment of the present invention it may be necessary to store the information of all the links from the user access device to the BAS in advance into the database unit of the access network resource management device according to the topology of the broadband access network.

The topology of a typical broadband access network is complex and may include ring-shaped parts besides tree-shaped parts, star-shaped parts and chain-shaped parts. Since a star and a chain are both trees in special forms, the links between the user access device and the BAS can be obtained according to a tree-shaped topology for a tree-shaped topology, a star-shaped topology and a chain-shaped topology. For a ring-shaped topology, due to the indefiniteness of the links the user access device takes for accessing the BAS in the ring-shaped topology, the links between the user access device and the BAS can not be obtained directly according to a tree-shaped topology as in a tree-shaped network.

According to another aspect of the embodiment, a broadband access network containing a ring-shaped topology is transformed into a tree-shaped topology in initiating a node data table, so that the whole network is tree-shaped with all possible links between the user access device and the BAS being recorded according to the tree topology.

An embodiment of transforming the ring-shaped topology into a tree is illustrated as set forth below. The ring-shaped topologies can be classified as shared rings and non-shared rings in which the resources of shared ring are shared among the network devices on the shared ring and the resources of the non-shared ring are occupied proportionally by the network devices on the ring. The shared ring referred to may be a Rapid Spanning Tree Protocol (RSTP) ring, Resilient Packet Ring (RPR) or VP-Ring, while the non-shared ring may be a Synchronous Digital Hierarchy (SDH) ring or Multi-Protocol Label Switching (MPLS) ring.

Figure 4 is a schematic diagram for transforming a shared ring into a tree-shaped topology, which is illustrated through an example of a ring containing a BAS and four network convergence devices. As shown in Figure 4, network convergence devices A, B, C and D and a BAS form a shared ring before transforming. During the transforming of the shared ring into a tree, a virtual link is introduced and is connected to the BAS, and the network convergence devices A, B, C and D share the virtual link. After the shared ring is transformed into a tree, the network convergence devices A, B, C and D share the resources between the network convergence devices and the BAS.

Figure 5 is a schematic diagram for transforming a non-shared ring into a tree, which is illustrated through an example of a ring containing a BAS and four network convergence devices. As shown in Figure 5, network convergence devices A, B, C and D and a BAS form a non-shared ring before transforming. During the transforming of the non-shared ring into a tree, the network convergence devices A, B, C and D are connected to the BAS respectively and the resources between each network convergence device and the BAS is allocated according to the original allocation of link resources in the non-shared ring for each network convergence device. After the non-shared ring is transformed into a tree, the latter topology as shown in Figure 5 can be obtained. After the non-shared ring is transformed into a tree, the proportion of resources occupied by each network convergence device of the non-shared ring may also be allocated according to the current network conditions instead of the original proportion occupied by each network convergence device.

As shown in Figures 4 and 5, a network device serves as a BAS in a shared ring or a non-shared ring can be regarded as an access device of the shared ring or the non-shared ring; a network device, serving as a network convergence device, can be directly referred to as a network device of the shared ring or the non-shared ring.

When a ring-shaped topology exists between a network convergence device and a user access device, the ring-shaped topology may also be transformed into a tree according to the method as shown in Figures 4 and 5. The network convergence device becomes an access device of the shared ring or the non-shared ring and the user access device becomes a network device of the shared ring or the non-shared ring.

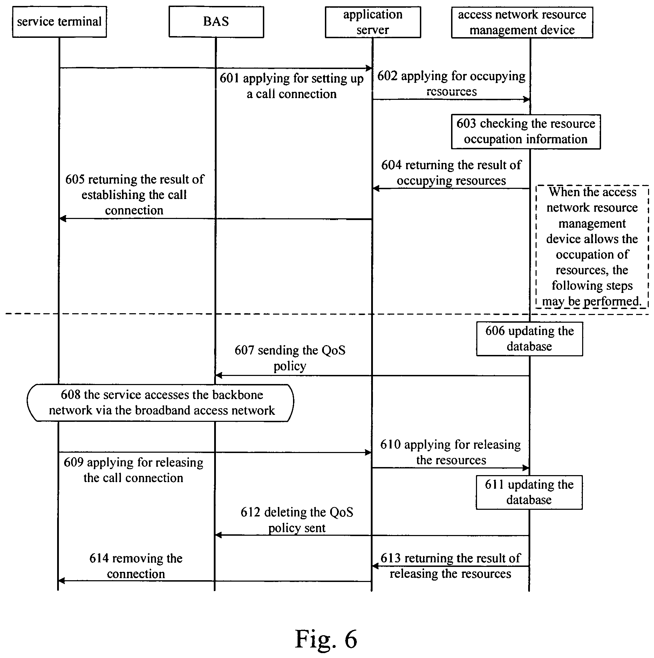

After a node data table, a link data table and a QoS policy for each service are established according to the network topology, the access network resource management device may implement an embodiment of the present invention following the procedure shown in Figure 6. In the description of the method provided by an embodiment, the link bandwidth represents the link resources, and the detailed procedure includes the following steps.

Step 601: when initiating a service with QoS requirements, a service terminal sends a request to an application server for establishing a call connection which carries the bandwidth needed for the service and the type of the service.

When the service initiated by the service terminal is a regular Internet service which has no QoS requirement, a regular procedure according to the prior art will be performed to implement the Internet service instead of the procedure provided by the present invention.

Step 602: after receiving the request for establishing a call connection from the service terminal, the application server applies to the access network resource management device for occupying resources for the Internet service; and the application carries the bandwidth needed by the Internet service and the type of the Internet service.

Step 603: on receiving the request for occupying resources from the application server, the access network resource management device first determines through which user access device the Internet service is initiated; after the user access device of the service is determined, the access network resource management device searches in its own node data table for the links through which the service data passed from the user access device to the BAS, and searches in the link data table and determines whether the links through which the service data would pass by have enough bandwidth according to the bandwidth required by the service; if the links have enough bandwidth, accepts the request for occupying resources for the service; if not all the links have enough bandwidth, rejects the request for occupying resources for the service.

Determining through which user access device the Internet service is initiated may be implemented using a broadband user positioning technique and other measures according to the prior art.

The process of determining whether a link has enough bandwidth includes: determining that the unoccupied bandwidth of a link is greater or equal to the bandwidth required by the service; if the unoccupied bandwidth of a link is greater or equal to the bandwidth required by the service, the link has enough bandwidth for the service; otherwise, the link has not enough bandwidth for the service.

Step 604: the access network resource management device signals the application server the result of the request for occupying resources; when the access network resource management device accepts the request for occupying resources in Step 603, it signals the application server for allowing occupying resources, and proceeds to Step 606; if the access network resource management device rejects the request for occupying resources in Step 603, it signals the application server for rejecting occupying resources.

Step 605: the application server returns a result of establishing the call connection to the service terminal according to the result of the resources occupancy returned by the access network resource management device. If the access network resource management device accepts the request for occupying resource, the application server accepts the service initiated by the service terminal; if the access network resource management device rejects the request for occupying resources, the application server rejects the service initiated by the service terminal.

Steps 606-607: on acceptance of the request for occupying resources for the Internet service, the access network resource management device updates the link data table in its database, searches in the database to obtain the QoS policy for the service based on the type of the Internet service, and sends the QoS policy to the BAS. The BAS receives and carries out the QoS policy sent by the access network resource management device.

Updating the link data table in the database by the access network resource management device includes: adding the bandwidth occupied by the service to the occupied bandwidth to get an updated occupied bandwidth in the entry of the link data table corresponding to the links to be passed by the service, and updating the unoccupied bandwidth in the link data table correspondingly.

Step 608: the service terminal sends service packets with QoS requirements to the backbone network via the broadband access network.

Steps 609-610: when the service with the QoS requirement initiated by the service terminal is terminated, the service terminal sends a request to the application server for removing the call connection. On receiving the request for removing the call connection from the service terminal, the application server applies to the access network resource management device for releasing the resources occupied by the service.

Steps 611-612: the access network resource management device releases the resources occupied by the service, updates the database, and instructs the BAS to delete the QoS policy of the service. The BAS deletes the QoS policy of the service. Updating the database includes: in the link data table, for each of all the links used by the service, subtracting the bandwidth occupied by the service from the occupied bandwidth in the entry corresponding to the link, and updating the unoccupied bandwidth of the link correspondingly.

Steps 613-614: the access network resource management device returns a result of releasing the resources to the application server. On receiving the result for releasing the resource, the application server indicates the service terminal to remove the connection.

The foregoing description is only a preferred embodiment of the present invention and is not for limiting the protection scope thereof.

## Claims

1. An access system for guaranteeing Quality of Service, QoS, comprising: an application server (25) and an access network resource management device (24), wherein
the application server (25) is adapted to receive a request from a service terminal (11) for a service with QoS requirements; request the access network resource management device (24) for resources to establish a service connection for the service terminal (11) ; and determine whether to accept the request of the service terminal (11) on obtaining a resource available response from the access network resource management device (24) ;
the access network resource management device (24) is adapted to record links from a user access device to an access server in a node data table according to the network topology and further record all the link resources including occupied and unoccupied resources in the links from the user access device to the access server; acquire information indicating a user access device that sent the request from the service terminal (11) for the service with QoS requirement; search the node data table to acquire links constituting a service connection through which service data would pass from the user access device to an access server; determine whether there are link resources available for the links by checking link resources occupation information saved in a link data table; and send the resource available response to the application server (25) when determining that there are link resources available for the links;
wherein the links are saved as tree-shaped topology in the node data table; wherein ring-shaped topology of a network topology of the access network is transformed into tree-shaped topology and recorded in the node data table when initiating the node data table.

2. The access system of Claim 1, wherein
the application server (25) is further adapted to request the access network resource management device (24) to release the resources occupied by the service connection; and the access network resource management device (24) is further adapted to release the resources occupied by the service connection as requested by the application server (25).

3. The access system of Claim 1, wherein
the access network resource management device (24) is further adapted to send a QoS policy corresponding to the service connection to an access server or instruct the access server to delete the QoS policy corresponding to the service connection; and
the access server is adapted to execute or delete the QoS policy as instructed by the access network resource management device (24).

4. The access system of Claim 1, wherein the application server (25) is further adapted to send to the service terminal (11) a response for establishing the service connection on obtaining a resource available response from the access network resource management device (24).

5. An access network resource management device (24) for guaranteeing Quality of Service, QoS, comprising:
a management control unit (32), is adapted to receive a request from a application server (25); wherein the request is sent from a service terminal (11) for occupying resources through a user access device; acquire information indicating the user access device; search a node data table to acquire links constituting a service connection through which service data would pass from the user access device to an access server according to the information indicating the user access device; determine whether there are link resources available for the links by checking link resources occupation information saved in a link data table; and send the resource available response to the application server (25) when determining that there are link resources available for the links;
a database unit (31), adapted to record links from a user access device to an access server in the node data table according to the network topology and further record all the link resources including occupied and unoccupied resources in the links from the user access device to the access server; store the node data table and the link data table; wherein the links are saved as tree-shaped topology in the node data table; wherein ring-shaped topology of a network topology of the access network is transformed into tree-shaped topology and recorded in the node data table when initiating the node data table.

6. The access network resource management device (24) of Claim 5, further comprising:
a third module adapted to record resource occupation information in the access network; wherein the resource occupation information is for assisting the first module in determining whether there are enough unoccupied resources in each of the links constituting the service connection in the access network to establish the service connection.

7. The access network resource management device (24) of Claim 5, further comprising:
a fourth module adapted to release resources occupied by the service connection as requested by the application server (25).

8. The access network resource management device (24) of Claim 6, further comprising:
a fifth module adapted to modify the resource occupancy information recorded in the third module when the first module determines there are enough unoccupied resources to establish the service connection or when the third module releases resources.

9. The access network resource management device (24) of Claim 6 wherein
the third module is further adapted to record a Qos policy corresponding to the service connection; and
the device further comprises a sixth module adapted to send the QoS policy corresponding to the service connection to an access server or to instruct the access server to delete the QoS policy for the service.

10. A method for guaranteeing Quality of Service, QoS, comprising setting a node data table and a link data table in an access network resource management device (24), wherein the node data table records links through which service data would pass from a user access device to an access server; and the link data table records link resources occupation information of the links; wherein the links are saved as tree-shaped topology in the node data table; wherein ring-shaped topology of a network topology of an access network is transformed into tree-shaped topology and recorded in the node data table when initiating the node data table; wherein the method comprising:
receiving, by the access network resource management device (24), a request from a application server (25); wherein the request is sent from a service terminal (11) for occupying resources through a user access device;
acquiring, by the access network resource management device (24), information indicating the user access device;
searching, by the access network resource management device (24), the node data table to acquire links constituting a service connection through which service data would pass from the user access device to an access server according to the information indicating the user access device;
determining, by the access network resource management device (24), whether there are link resources available for the links by checking link resources occupation information saved in the link data table; and
sending, by the access network resource management device (24), the resource available response to the application server (25) when determining that there are link resources available for the links.

11. The method of Claim 10, further comprising:
releasing resources occupied by the service connection as requested by the application server (25).

12. The method of Claim 10 or 11, further comprising:
recording resource occupation information in the access network,
wherein the resource occupation information is for assisting in determining whether there are enough unoccupied resources in each of links constituting the service connection in the access network to establish the service connection.

13. The method of Claim 12, further comprising:
modifying the resource occupancy information when determining that there are enough unoccupied resources in each of links constituting the service connection in the access network to establish the service connection.

14. The method of Claim 12, further comprising:
recording the Qos policy corresponding to the service connection; and
sending the QoS policy corresponding to the service connection to an access server or instructing the access server to delete the QoS policy corresponding to the service connection.

15. The method of Claim 10, wherein the transforming the network topology of the access network into the tree comprises:
sharing one link by all network devices on a shared ring except an access device when the network topology contains the shared ring, and connecting the link with the access device on the ring.

16. The method of Claim 10, wherein the transforming the network topology of the access network into the tree comprises:
connecting all network devices on a shared ring except an access device with the access device respectively when the network topology contains a non-shared ring, and sharing, by each network device except the access device, the resources in the non-shared ring proportionally.

## Patentansprüche

1. Zugangssystem zum Garantieren einer Dienstqualität, QoS, das Folgendes umfasst:
einen Anwendungs-Server (25) und eine Zugangsnetz-Betriebsmittelmanagementvorrichtung (24), wobei
der Anwendungs-Server (25) dafür ausgelegt ist, eine Anforderung von einem Dienstendgerät (11) für einen Dienst mit QoS-Anforderungen zu empfangen; von der Zugangsnetz-Betriebsmittelmanagementvorrichtung (24) Betriebsmittel anzufordern, um eine Dienstverbindung für das Dienstendgerät (11) aufzubauen; und zu bestimmen, ob die Anforderung des Dienstendgeräts (11) beim Erhalten einer Betriebsmittel-verfügbar-Antwort von der Zugangsnetz-Betriebsmittelmanagementvorrichtung (24) anzunehmen ist;
die Zugangsnetz-Betriebsmittelmanagementvorrichtung (24) dafür ausgelegt ist, die Verbindungen von einer Anwenderzugangsvorrichtung zu einem Zugangs-Server in einer Knotendatentabelle gemäß der Netztopologie aufzuzeichnen und ferner alle Verbindungsbetriebsmittel einschließlich der belegten und der nicht belegten Betriebsmittel in den Verbindungen von der Anwenderzugangsvorrichtung zu dem Zugangs-Server aufzuzeichnen; die Informationen, die eine Anwenderzugangsvorrichtung, die die Anforderung von dem Dienstendgerät (11) bezüglich des Dienstes mit der QoS-Anforderung gesendet hat, angeben, zu erfassen; die Knotendatentabelle zu durchsuchen, um die Verbindungen zu erfassen, die eine Dienstverbindung bilden, durch die die Dienstdaten von der Anwenderzugangsvorrichtung zu einem Zugangs-Server hindurchgehen würden; durch das Überprüfen der Verbindungsbetriebsmittel-Belegungsinformationen, die in einer Verbindungsdatentabelle gespeichert sind, zu bestimmen, ob es Verbindungsbetriebsmittel gibt, die für die Verbindungen verfügbar sind; und die Betriebsmittel-verfügbar-Antwort an den Anwendungs-Server (25) zu senden, wenn bestimmt wird, dass es Verbindungsbetriebsmittel gibt, die für die Verbindungen verfügbar sind;
wobei die Verbindungen als eine baumförmige Topologie in der Knotendatentabelle gespeichert sind; wobei eine ringförmige Topologie einer Netztopologie des Zugangsnetzes in die baumförmige Topologie transformiert wird und in der Knotendatentabelle aufgezeichnet wird, wenn die Knotendatentabelle begonnen wird.

2. Zugangssystem nach Anspruch 1, wobei
der Anwendungs-Server (25) ferner dafür ausgelegt ist, die Zugangsnetz-Betriebsmittelmanagementvorrichtung (24) aufzufordern, die durch die Dienstverbindung belegten Betriebsmittel freizugeben; und
die Zugangsnetz-Betriebsmittelmanagementvorrichtung (24) ferner dafür ausgelegt ist, die durch die Dienstverbindung belegten Betriebsmittel wie durch den Anwendungs-Server (25) angefordert freizugeben.

3. Zugangssystem nach Anspruch 1, wobei
die Zugangsnetz-Betriebsmittelmanagementvorrichtung (24) ferner dafür ausgelegt ist, eine QoS-Strategie, die der Dienstverbindung entspricht, an einen Zugangs-Server zu senden oder den Zugangs-Server anzuweisen, die QoS-Strategie, die der Dienstverbindung entspricht, zu löschen; und
der Zugangsserver dafür ausgelegt ist, die QoS-Strategie wie durch die Zugangsnetz-Betriebsmittelmanagementvorrichtung (24) angewiesen auszuführen oder zu löschen.

4. Zugangssystem nach Anspruch 1, wobei
der Anwendungs-Server (25) ferner dafür ausgelegt ist, eine Antwort zum Aufbauen der Dienstverbindung beim Erhalten einer Betriebsmittel-verfügbar-Antwort von der Zugangsnetz-Betriebsmittelmanagementvorrichtung (24) an das Dienstendgerät (11) zu senden.

5. Zugangsnetz-Betriebsmittelmanagementvorrichtung (24) zum Garantieren einer Dienstqualität, QoS, wobei die Zugangsnetz-Betriebsmittelmanagementvorrichtung (24) Folgendes umfasst:
eine Managementsteuereinheit (32), die dafür ausgelegt ist, eine Anforderung von einem Anwendungs-Server (25) zu empfangen; wobei die Anforderung von einem Dienstendgerät (11) zum Belegen von Betriebsmitteln durch eine Anwenderzugangsvorrichtung gesendet wird; die Informationen, die die Anwenderzugangsvorrichtung angeben, zu erfassen; eine Knotendatentabelle gemäß den Informationen, die die Anwenderzugangsvorrichtung angeben, zu durchsuchen, um die Verbindungen zu erfassen, die eine Dienstverbindung bilden, durch die die Dienstdaten von der Anwenderzugangsvorrichtung zu einem Zugangs-Server hindurchgehen würden; durch das Überprüfen der Verbindungsbetriebsmittel-Belegungsinformationen, die in einer Verbindungsdatentabelle gespeichert sind, zu bestimmen, ob es Verbindungsbetriebsmittel gibt, die für die Verbindungen verfügbar sind; und die Betriebsmittel-verfügbar-Antwort an den Anwendungs-Server (25) zu senden, wenn bestimmt wird, dass es Verbindungsbetriebsmittel gibt, die für die Verbindungen verfügbar sind;
eine Datenbankeinheit (31), die dafür ausgelegt ist, die Verbindungen von einer Anwenderzugangsvorrichtung zu einem Zugangs-Server in der Knotendatentabelle gemäß der Netztopologie aufzuzeichnen und ferner alle Verbindungsbetriebsmittel einschließlich der belegten und der nicht belegten Betriebsmittel in den Verbindungen von der Anwenderzugangsvorrichtung zu dem Zugangs-Server aufzuzeichnen; die Knotendatentabelle und die Verbindungsdatentabelle zu speichern; wobei die Verbindungen als eine baumförmige Topologie in der Knotendatentabelle gespeichert sind, wobei die ringförmige Topologie einer Netztopologie des Zugangsnetzes in eine baumförmige Topologie transformiert und in der Knotendatentabelle aufgezeichnet wird, wenn die Knotendatentabelle begonnen wird.

6. Zugangsnetz-Betriebsmittelmanagementvorrichtung (24) nach Anspruch 5, die ferner Folgendes umfasst:
ein drittes Modul, das dafür ausgelegt ist, die Betriebsmittelbelegungsinformationen in dem Zugangsnetz aufzuzeichnen; wobei die Betriebsmittelbelegungsinformationen dem Unterstützen des ersten Moduls beim Bestimmen dienen, ob es ausreichend nicht belegte Betriebsmittel in jeder der Verbindungen gibt, die die Dienstverbindung in dem Zugangsnetz bilden, um die Dienstverbindung aufzubauen.

7. Zugangsnetz-Betriebsmittelmanagementvorrichtung (24) nach Anspruch 5, die ferner Folgendes umfasst:
ein viertes Modul, das dafür ausgelegt ist, die durch die Dienstverbindung belegten Betriebsmittel wie durch den Anwendungs-Server (25) angefordert freizugeben.

8. Zugangsnetz-Betriebsmittelmanagementvorrichtung (24) nach Anspruch 6, die ferner Folgendes umfasst:
ein fünftes Modul, das dafür ausgelegt ist, die in dem dritten Modul aufgezeichneten Betriebsmittelbelegungsinformationen zu modifizieren, wenn das erste Modul bestimmt, dass es ausreichend nicht belegte Betriebsmittel gibt, um die Dienstverbindung aufzubauen, oder wenn das dritte Modul die Betriebsmittel freigibt.

9. Zugangsnetz-Betriebsmittelmanagementvorrichtung (24) nach Anspruch 6, wobei das dritte Modul ferner dafür ausgelegt ist, eine QoS-Strategie, die der Dienstverbindung entspricht, aufzuzeichnen; und
die Vorrichtung ferner ein sechstes Modul umfasst, das dafür ausgelegt ist, die QoS-Strategie, die der Dienstverbindung entspricht, an einen Zugangs-Server zu senden oder den Zugangs-Server anzuweisen, die QoS-Strategie für den Dienst zu löschen.

10. Verfahren zum Garantieren einer Dienstqualität, QoS, das Folgendes umfasst:
Einrichten einer Knotendatentabelle und einer Verbindungsdatentabelle in einer Zugangsnetz-Betriebsmittelmanagementvorrichtung (24), wobei die Knotendatentabelle die Verbindungen aufzeichnet, durch die die Dienstdaten von einer Anwenderzugangsvorrichtung zu einem Zugangs-Server hindurchgehen würden; und die Verbindungsdatentabelle die Verbindungsbetriebsmittel-Belegungsinformationen der Verbindungen aufzeichnet; wobei die Verbindungen als eine baumförmige Topologie in der Knotendatentabelle gespeichert sind; wobei die ringförmige Topologie einer Netztopologie eines Zugangsnetzes in die baumförmige Topologie transformiert und in der Knotendatentabelle aufgezeichnet wird, wenn die Knotendatentabelle begonnen wird; wobei das Verfahren Folgendes umfasst:
Empfangen durch die Zugangsnetz-Betriebsmittelmanagementvorrichtung (24) einer Anforderung von einem Anwendungs-Server (25); wobei die Anforderung von einem Dienstendgerät (11) zum Belegen von Betriebsmitteln durch eine Anwenderzugangsvorrichtung gesendet wird;
Erfassen durch die Zugangsnetz-Betriebsmittelmanagementvorrichtung (24) von Informationen, die die Anwenderzugangsvorrichtung angeben;
Durchsuchen durch die Zugangsnetz-Betriebsmittelmanagementvorrichtung (24) der Knotendatentabelle gemäß den Informationen, die die Anwenderzugangsvorrichtung angeben, um die Verbindungen zu erfassen, die die Dienstverbindung bilden, durch die die Dienstdaten von der Anwenderzugangsvorrichtung zu einem Zugangs-Server hindurchgehen würden;
Bestimmen durch die Zugangsnetz-Betriebsmittelmanagementvorrichtung (24) durch das Überprüfen der in der Verbindungsdatentabelle gespeicherten Verbindungsbetriebsmittel-Belegungsinformationen, ob es Verbindungsbetriebsmittel gibt, die für die Verbindungen verfügbar sind; und
Senden durch die Zugangsnetz-Betriebsmittelmanagementvorrichtung (24) der Betriebsmittel-verfügbar-Antwort an den Anwendungs-Server (25), wenn bestimmt wird, dass es Verbindungsbetriebsmittel gibt, die für die Verbindungen verfügbar sind.

11. Verfahren nach Anspruch 10, das ferner Folgendes umfasst:
Freigeben der durch die Dienstverbindung belegten Betriebsmittel wie durch den Anwendungs-Server (25) angefordert.

12. Verfahren nach Anspruch 10 oder 11, das ferner Folgendes umfasst:
Aufzeichnen der Betriebsmittelbelegungsinformationen in dem Zugangsnetz,
wobei die Betriebsmittelbelegungsinformationen dem Unterstützen beim Bestimmen dienen, ob es in jeder der Verbindungen, die die Dienstverbindung in dem Zugangsnetz bilden, ausreichend nicht belegte Betriebsmittel gibt, um die Dienstverbindung aufzubauen.

13. Verfahren nach Anspruch 12, das ferner Folgendes umfasst:
Modifizieren der Betriebsmittelbelegungsinformationen, wenn bestimmt wird, dass es ausreichend nicht belegte Betriebsmittel in jeder Verbindung gibt, die die Dienstverbindung in dem Zugangsnetz bilden, um die Dienstverbindung aufzubauen.

14. Verfahren nach Anspruch 12, das ferner Folgendes umfasst:
Aufzeichnen der QoS-Strategie, die der Dienstverbindung entspricht; und
Senden der QoS-Strategie, die der Dienstverbindung entspricht, an einen Zugangs-Server oder Anweisen des Zugangs-Servers, die QoS-Strategie, die der Dienstverbindung entspricht, zu löschen.

15. Verfahren nach Anspruch 10, wobei das Transformieren der Netztopologie des Zugangsnetzes in den Baum Folgendes umfasst:
gemeinsames Benutzen einer Verbindung durch alle Netzvorrichtungen in einem gemeinsam benutzten Ring mit Ausnahme einer Zugangsvorrichtung, wenn die Netztopologie den gemeinsam benutzten Ring enthält, und Verbinden der Verbindung mit der Zugangsvorrichtung in dem Ring.

16. Verfahren nach Anspruch 10, wobei das Transformieren der Netztopologie des Zugangsnetzes in den Baum Folgendes umfasst:
Verbinden aller Netzvorrichtungen in einem gemeinsam benutzten Ring mit Ausnahme einer Zugangsvorrichtung jeweils mit der Zugangsvorrichtung, wenn die Netztopologie einen nicht gemeinsam benutzten Ring enthält, und proportionales gemeinsames Benutzen durch jede Netzvorrichtung mit Ausnahme der Zugangsvorrichtung der Betriebsmittel in dem nicht gemeinsam benutzten Ring.

## Revendications

1. Système d'accès permettant de garantir une qualité de service, QoS, comprenant :
un serveur d'application (25) et un dispositif de gestion de ressources de réseau d'accès (24), dans lequel
le serveur d'application (25) est adapté pour recevoir une demande provenant d'un terminal de services (11) pour un service avec des demandes QoS ; demander au dispositif de gestion de ressources de réseau d'accès (24) des ressources pour établir une connexion de services pour le terminal de services (11) ; et déterminer d'accepter ou non la demande du terminal de services (11) sur l'obtention d'une réponse de ressources disponibles provenant du dispositif de gestion de ressources de réseau d'accès (24) ;
le dispositif de gestion de ressources de réseau d'accès (24) est adapté pour enregistrer des liaisons provenant d'un dispositif d'accès utilisateur vers un serveur d'accès dans une table de données de noeuds selon la topologie de réseau, et enregistrer en outre toutes les ressources de liaison comprenant des ressources occupées et inoccupées dans les liaisons provenant du dispositif d'accès utilisateur vers le serveur d'accès ; acquérir des informations indiquant un dispositif d'accès utilisateur qui a envoyé la demande à partir du terminal de services (11) pour le service avec une demande QoS ; rechercher dans la table de données de noeuds afin d'acquérir des liaisons comportant une connexion de services par laquelle des données de services passeraient du dispositif d'accès utilisateur à un serveur d'accès ; déterminer s'il existe des ressources de liaison disponibles pour les liaisons en vérifiant des informations d'occupation de ressources de liaison sauvegardées dans une table de données de liaisons ; et envoyer la réponse de ressources disponibles au serveur d'applications (25) lorsqu'on détermine qu'il existe des ressources de liaison disponibles pour les liaisons ;
dans lequel les liaisons sont sauvegardées en tant que topologie de forme arborescente dans la table de données de noeuds ; dans lequel une topologie en forme d'anneau d'une topologie de réseau du réseau d'accès est transformée en topologie de forme arborescente et enregistrée dans la table de données de noeuds lors du démarrage de la table de données de noeuds.

2. Système d'accès selon la revendication 1, dans lequel
le serveur d'applications (25) est en outre adapté pour demander au dispositif de gestion de ressources de réseau d'accès (24) de libérer les ressources occupées par la connexion de services ; et
le dispositif de gestion de ressources de réseau d'accès (24) est adapté en outre pour libérer les ressources occupées par la connexion de services comme demandé par le serveur d'applications (25).

3. Système d'accès selon la revendication 1, dans lequel
le dispositif de gestion de ressources de réseau d'accès (24) est adapté en outre pour envoyer une règle QoS correspondant à la connexion de services à un serveur d'accès ou donner instruction au serveur d'accès d'effacer la règle QoS correspondant à la connexion de services ; et
le serveur d'accès est adapté pour exécuter ou effacer la règle QoS conformément à l'instruction donnée par le dispositif de gestion de ressources de réseau d'accès (24).

4. Système d'accès selon la revendication 1, dans lequel
le serveur d'applications (25) est adapté en outre pour envoyer au terminal de services (11) une réponse permettant d'établir la connexion de services sur l'obtention d'une réponse de ressources disponibles provenant du dispositif de gestion de ressources de réseau d'accès (24).

5. Dispositif de gestion de ressources de réseau d'accès (24) permettant de garantir une qualité de service, QoS, comprenant :
une unité de commande de gestion (32) adaptée pour recevoir une demande provenant d'un serveur d'applications (25) ; dans lequel la demande est envoyée à partir d'un terminal de services (11) pour l'occupation des ressources par le biais d'un dispositif d'accès utilisateur ; acquérir des informations indiquant le dispositif d'accès utilisateur ; rechercher dans une table de données de noeuds pour acquérir des liaisons comportant une connexion de services par laquelle des données de services passeraient du dispositif d'accès utilisateur à un serveur d'accès en fonction des informations indiquant le dispositif d'accès utilisateur ; déterminer s'il existe des ressources de liaison disponibles pour les liaisons en vérifiant les informations d'occupation de ressources de liaison sauvegardées dans une table de données de liaisons ; et envoyer la réponse de ressources disponibles au serveur d'applications (25) lorsqu'on détermine qu'il existe des ressources de liaison disponibles pour les liaisons ;
une unité de base de donnée (31), adaptée pour enregistrer des liaisons provenant d'un dispositif d'accès utilisateur vers un serveur d'accès dans la table de données de noeuds selon la topologie de réseau, et enregistrer en outre toutes les ressources de liaison comprenant des ressources occupées et inoccupées dans les liaisons provenant du dispositif d'accès utilisateur vers le serveur d'accès ; stocker la table de données de noeuds et la table de données de liaisons ; dans lequel les liaisons sont sauvegardées en tant que topologie de forme arborescente dans la table de données de noeuds ; dans lequel une topologie en forme d'anneau d'une topologie de réseau du réseau d'accès est transformée en topologie de forme arborescente et enregistrée dans la table de données de noeuds lors du démarrage de la table de données de noeuds.

6. Dispositif de gestion de ressources de réseau d'accès (24) selon la revendication 5, comprenant en outre :
un troisième module adapté pour enregistrer des informations d'occupation de ressources dans le réseau d'accès ; dans lequel les informations d'occupation de ressources servent à aider le premier module à déterminer s'il existe suffisamment de ressources inoccupées dans chacune des liaisons comportant la connexion de services dans le réseau d'accès en vue d'établir la connexion de services.

7. Dispositif de gestion de ressources de réseau d'accès (24) selon la revendication 5, comprenant en outre :
un quatrième module adapté pour libérer des ressources occupées par la connexion de services comme demandé par le serveur d'applications (25).

8. Dispositif de gestion de ressources de réseau d'accès (24) selon la revendication 6, comprenant en outre :
un cinquième module adapté pour modifier les informations d'occupation de ressources enregistrées dans le troisième module lorsque le premier module détermine qu'il existe suffisamment de ressources inoccupées pour établir la connexion de services ou lorsque le troisième module libère des ressources.

9. Dispositif de gestion de ressources de réseau d'accès (24) selon la revendication 6, dans lequel :
le troisième module est adapté en outre pour enregistrer une règle QoS correspondant à la connexion de services ; et
le dispositif comprend en outre un sixième module adapté pour envoyer la règle QoS correspondant à la connexion de services à un serveur d'accès ou pour donner instruction au serveur d'accès d'effacer la règle QoS pour le service.

10. Procédé permettant de garantir une qualité de service, QoS, consistant à définir une table de données de noeuds et une table de données de liaisons dans un dispositif de gestion de ressources de réseau d'accès (24), dans lequel la table de données de noeuds enregistre des liaisons par lesquelles des données de services passeraient d'un dispositif d'accès utilisateur à un serveur d'accès ; et la table de données de liaisons enregistre des informations d'occupation de ressources de liaison des liaisons ; dans lequel les liaisons sont sauvegardées en tant que topologie de forme arborescente dans la table de données de noeuds ; dans lequel une topologie en forme d'anneau d'une topologie de réseau d'un réseau d'accès est transformée en topologie de forme arborescente et enregistrée dans la table de données de noeuds lors du démarrage de la table de données de noeuds ; dans lequel le procédé comprend les étapes consistant à :
recevoir, par le dispositif de gestion de ressources de réseau d'accès (24), une demande provenant d'un serveur d'applications (25) ;
dans lequel la demande est envoyée à partir d'un terminal de services (11) pour l'occupation des ressources par le biais d'un dispositif d'accès utilisateur ;
acquérir, par le dispositif de gestion de ressources de réseau d'accès (24), des informations indiquant le dispositif d'accès utilisateur ;
rechercher, par le dispositif de gestion de ressources de réseau d'accès (24), dans la table de données de noeuds pour acquérir des liaisons comportant une connexion de services par laquelle des données de services passeraient du dispositif d'accès utilisateur à un serveur d'accès en fonction des informations indiquant le dispositif d'accès utilisateur ;
déterminer, par le dispositif de gestion de ressources de réseau d'accès (24), s'il existe des ressources de liaison disponibles pour les liaisons en vérifiant les informations d'occupation de ressources de liaison sauvegardées dans la table de données de liaison ; et
envoyer, par le dispositif de gestion de ressources de réseau d'accès (24), la réponse de ressources disponibles au serveur d'applications (25) lorsqu'on détermine qu'il existe des ressources de liaison disponibles pour les liaisons.

11. Procédé selon la revendication 10, comprenant en outre :
la libération des ressources occupées par la connexion de services tel que demandé par le serveur d'applications (25).

12. Procédé selon la revendication 10 ou 11, comprenant en outre :
l'enregistrement des informations d'occupation de ressources dans le réseau d'accès,
dans lequel les informations d'occupation de ressources servent à aider à déterminer s'il existe suffisamment de ressources inoccupées dans chacune des liaisons composant la connexion de services dans le réseau d'accès afin d'établir la connexion de services.

13. Procédé selon la revendication 12, comprenant en outre :
la modification des informations d'occupation de ressources lorsqu'on détermine qu'il existe suffisamment de ressources inoccupées dans chacune des liaisons composant la connexion de services dans le réseau d'accès pour établir la connexion de services.

14. Procédé selon la revendication 12, comprenant en outre :
l'enregistrement de la règle QoS correspondant à la connexion de services ; et
l'envoi de la règle QoS correspondant à la connexion de services à un serveur d'accès ou l'instruction au serveur d'accès d'effacer la règle QoS correspondant à la connexion de services.

15. Procédé selon la revendication 10, dans lequel la transformation de la topologie de réseau du réseau d'accès en arborescence comprend :
le partage d'une liaison par tous les dispositifs de réseau sur un anneau partagé à l'exception d'un dispositif d'accès lorsque la topologie de réseau contient l'anneau partagé, et la connexion de la liaison au dispositif d'accès sur l'anneau.

16. Procédé selon la revendication 10, dans lequel la transformation de la topologie de réseau du réseau d'accès en arborescence comprend :
la connexion de tous les dispositifs de réseau sur un anneau partagé à l'exception d'un dispositif d'accès au dispositif d'accès respectivement lorsque la topologie de réseau contient un anneau non partagé, et le partage, par chaque dispositif de réseau à l'exception du dispositif d'accès, des ressources dans l'anneau non partagé proportionnellement.
